(19) Europäisches Patentamt
European Patent Office
Office européen des brevets

(11) EP 4 058 492 B1

(12) # FASCICULE DE BREVET EUROPEEN

(45) Date de publication et mention de la délivrance du brevet:
**03.01.2024 Bulletin 2024/01**

(21) Numéro de dépôt: **20828661.7**

(22) Date de dépôt: **30.11.2020**

(51) Classification Internationale des Brevets (IPC):
***C08G 8/10*** *(2006.01)*

(52) Classification Coopérative des Brevets (CPC):
**C08G 8/10**

(86) Numéro de dépôt international:
**PCT/FR2020/052220**

(87) Numéro de publication internationale:
**WO 2021/123534 (24.06.2021 Gazette 2021/25)**

(54) **PROCÉDÉ DE PRÉPARATION D'UNE RÉSINE PHÉNOLIQUE DE TYPE RÉSOL À TENEUR EN FORMALDÉHYDE RÉDUITE**

VERFAHREN ZUM HERSTELLEN EINES PHENOLHARZES VOM RESOL-TYP MIT REDUZIERTEM FORMALDEHYDGEHALT

METHOD FOR PREPARING A RESOL-TYPE PHENOLIC RESIN WITH REDUCED FORMALDEHYDE CONTENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2019 FR 1914977**

(43) Date de publication de la demande:
**21.09.2022 Bulletin 2022/38**

(73) Titulaire: **Commissariat à l'Energie Atomique et aux Energies Alternatives**
**75015 Paris (FR)**

(72) Inventeurs:
- **BRANDT, Damien**
  **37260 MONTS (FR)**
- **CHAUSSOY, Nathanaël**
  **37260 MONTS (FR)**
- **GERARD, Jean-François**
  **37260 MONTS (FR)**

(74) Mandataire: **Brevalex**
**Tour Trinity**
**1 B Place de la Défense**
**92400 Courbevoie (FR)**

(56) Documents cités:
**WO-A1-2004/018536**
**US-A1- 2013 183 524**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 4 058 492 B1

## Description

### DOMAINE TECHNIQUE

La présente invention a trait à un procédé de préparation d'une résine phénolique présentant, à l'issue de ce procédé, une faible teneur en formaldéhyde (dit ci-après formaldéhyde libre).

Les résines phénoliques, également appelées communément résines phénoplastes, résultent de la condensation d'un composé phénolique (classiquement, du phénol) avec un composé aldéhyde (classiquement, le formaldéhyle, également désigné par le terme formol) s'accompagnant de la formation de molécules d'eau, cette condensation conduisant à des oligomères ou condensats comprenant un enchaînement de cycles aromatiques liés entre eux par le biais de groupes méthylènes, ces oligomères pouvant être ensuite ultérieurement transformés par polycondensation thermique en présence éventuelle d'un catalyseur en un réseau tridimensionnel, donnant lieu à un matériau durci très résistant.

Historiquement, Von Baeyer a été le premier chimiste à effectuer des travaux sur la polycondensation du phénol et du formaldéhyde en 1872, ces travaux annonçant ceux de Léo Beakeland, qui a mis au point, entre 1907 et 1909, un procédé de fabrication de matériaux durcis à partir d'une résine phénolique. Il a pu mettre également en évidence, lorsque la polycondensation est réalisée, en milieu basique, les états de produits suivants en fonction de la température de fabrication :

- un premier état se traduisant par une résine liquide, éventuellement pâteuse mais restant fusible et soluble, la résine sous cet état étant qualifiée de résine du type résol ;
- un deuxième état, lorsque la température augmente, se traduisant par un produit de condensation intermédiaire (ou autrement dit, où le taux de conversion du phénol est intermédiaire), ce produit se présentant sous forme d'un produit généralement insoluble, infusible mais susceptible d'être ramolli et étant qualifié de résitol ;
- un troisième état, lorsque la température augmente encore, se traduisant par un produit de condensation supérieure dure, infusible et insoluble, résistant aux acides et à des températures importantes, ce produit étant qualifié de résite.

Du fait de ces différents états de polycondensation, les produits issus de la polycondensation du phénol et du formaldéhyde peuvent être utilisés dans de nombreux domaines d'application, tels que l'isolation, la fonderie, les adhésifs, les stratifiés, le moulage, les peintures. Plus spécifiquement, les résines trouvent également une application dans le domaine de l'aérospatial, depuis les années 1970, où elles peuvent entrer dans la réalisation de revêtements de protection thermique, en particulier des boucliers thermiques comprenant, comme matrice, une matrice issue de la réticulation d'une résine phénolique.

L'état le plus communément utilisé est la résine phénolique de type résol qui peut être conservée prête à l'emploi et du fait de son état liquide ou semi-liquide être utilisée, tel un vernis, directement par simple application sur un substrat, éventuellement après l'avoir chargée avec une ou plusieurs charges, suivie d'une réticulation de la résine, moyennant quoi il résulte un matériau (éventuellement composite, lorsqu'il comprend des charges) durci correspondant à un réseau tridimensionnel réticulé.

Toutefois, les résines phénoliques de type résol, du fait d'un état de condensation moins important (par exemple, avec un taux de conversion du phénol allant de 50 à 80%) comprennent encore du formaldéhyde et du phénol libres (c'est-à-dire non encore condensés). Or le formaldéhyde est un composé cancérigène mutagène reprotoxique (CMR) de catégorie 1b, qui dès 2026, par la réglementation REACH, va entrer dans l'annexe XVI, ce qui signifie, en d'autres termes, l'interdiction de commercialisation de tous produits comprenant une teneur en formaldéhyde au-delà de 0,1%. Par ailleurs, le formaldéhyde est un produit issu de l'industrie pétrolière.

Aussi, du fait de cette classification CMR, de la future réglementation REACH et en vue de la raréfaction des ressources pétrolières, il y a une réelle nécessité à proposer des résines phénoliques de type résol avec une teneur en formaldéhyde réduite, en particulier pour minimiser les problèmes de toxicité liés à ce produit.

Pour ce faire, il a été proposé d'ajouter, lors de la fabrication de la résine, un composé apte à réagir avec le formaldéhyde libre, par exemple, un composé amine primaire susceptible de former un composé imine, ces composés amines primaires pouvant être, par exemple :

- de l'urée, comme décrit dans EP0148050, avec pour inconvénient toutefois que les produits de réaction de l'urée et du formaldéhyde ne sont pas stables et peuvent se dégrader à certaines températures ;
- de l'éthanolamine décrit dans EP0480778, l'éthanolamine réagissant avec le phénol et le formaldéhyde résiduels pour former des hydroxybenzylaminoéthanols, moyennant l'ajout d'un acide spécifique, l'acide sulfamique, qui est un composé particulièrement onéreux.

US2013183524 décrit une la synthèse d'une résine résole en présence de glycine.

Au vu de ce qui existe et des inconvénients mentionnés ci-dessus, les auteurs de la présente invention se sont

fixé pour objectif de proposer un procédé de préparation d'une résine phénolique de type résol présentant une teneur en formaldéhyde libre réduite (et, plus spécifiquement inférieure à 0,1%) sans que les propriétés thermomécaniques du produit résultant ultérieurement du durcissement de la résine en soient amoindries.

## EXPOSÉ DE L'INVENTION

Ainsi, l'invention a ainsi trait à un procédé de préparation d'une résine phénolique de type résol comprenant les étapes suivantes :

a) une étape de condensation du phénol et du formaldéhyde, en milieu basique, le formaldéhyde étant en excès molaire par rapport au phénol, à une température de condensation d'au moins 50°C jusqu'à ce que le taux de conversion du phénol soit de 50 à 80%, moyennant quoi il résulte une résine phénolique de type résol comprenant du formaldéhyde libre ;
b) une étape de mesure de la teneur massique en formaldéhyde libre de la résine phénolique obtenue en a) ;
c) une étape de diminution de la teneur massique en formaldéhyde libre de la résine phénolique obtenue en a) par mise en contact de celle-ci avec un composé aminophénolique en quantité excédentaire par rapport au formaldéhyde libre et à une température inférieure à la température de condensation de l'étape a).

Avant d'entrer plus en détail dans l'exposé de cette invention, nous précisons les définitions suivantes.
Par taux de conversion du phénol, il s'entend le pourcentage massique de phénol ayant participé à la réaction de condensation avec le formaldéhyde lors de l'étape a) par rapport au phénol de départ, ce taux de conversion étant déterminé par la relation suivante :

$$\tau = 1 - \frac{m_p}{m_p^i}$$

dans laquelle :

***r*** correspond au taux de conversion du phénol ;
$m^i_p$ correspond à la masse initiale (en g) de phénol dans le milieu réactionnel ;
$m_p$ correspond à la masse (en g) de phénol résiduelle ou libre dans le milieu réactionnel à l'issue de la réaction,

cette masse de phénol résiduelle ou libre étant déterminée à partir de données issues de la technique de chromatographie en phase gazeuse couplée à de la spectrométrie de masse (cette technique étant connue sous l'abréviation GCMS).
Un protocole précis de détermination du taux de conversion du phénol est fourni dans la partie relative à l'exposé détaillé de modes de réalisation particuliers.
Par formaldéhyde libre, il s'entend le formaldéhyde qui n'a pas réagi lors de la réaction de condensation de l'étape a).
Comme mentionné ci-dessus, le procédé de l'invention comprend, en premier lieu, une étape de condensation du phénol et du formaldéhyde, en milieu basique, le formaldéhyde étant en excès molaire par rapport au phénol, à une température de condensation d'au moins 50°C jusqu'à ce que le taux de conversion du phénol soit de 50 à 80%, moyennant quoi il résulte une résine phénolique de type résol comprenant du formaldéhyde libre. Le formaldéhyde utilisé initialement peut se présenter en solution aqueuse (par exemple, une solution aqueuse comprenant du formaldéhyde à hauteur de 37% massique dans l'eau).
Plus spécifiquement, l'étape de condensation est réalisée en la seule présence de phénol, de formaldéhyde, éventuellement en solution aqueuse, et du milieu basique (ce qui signifie, en d'autres termes, qu'elle ne nécessite pas d'autres ingrédients).
Plus spécifiquement, le milieu basique, dans lequel se déroule la réaction, peut être une solution aqueuse comprenant une ou plusieurs bases, telles que NaOH, $Na_2CO_3$, KOH, $K_2CO_3$, $Ba(OH)_2$, $NH_3$, une amine primaire, une amine secondaire et des mélanges de celles-ci, avec pour préférence, une solution aqueuse comprenant, comme base, du $NH_3$ (soit, en d'autres termes, de l'ammoniaque).
La ou les bases du milieu basique agissent comme catalyseur de la réaction de condensation et sont, de préférence, présentes en une teneur allant de 1 à 20% molaire par rapport au nombre de moles de phénol présent initialement dans l'étape de condensation utilisé (c'est-à-dire avant que la réaction de condensation n'ait démarré).
Le formaldéhyde est en excès molaire par rapport au phénol et, plus spécifiquement, le rapport molaire (formaldéhyde/phénol) est supérieur à 1 et peut aller jusqu'à 3. En particulier, il peut aller de 1,1 à 2. Il s'entend que l'excès

molaire est défini en référence au formaldéhyde initialement utilisé (c'est-à-dire avant que la réaction de condensation n'ait démarré) et du phénol initialement utilisé (c'est-à-dire avant que la réaction de condensation n'ait démarré).

Enfin, pour l'étape a), la température de condensation est fixée à une valeur supérieure à 50°C et, plus spécifiquement, peut aller de 50 à 100°C.

Plus spécifiquement, l'étape de condensation a) peut être mise en oeuvre par la séquence d'opérations suivantes :

- une opération de mise en contact du phénol et du formaldéhyde, le formaldéhyde étant en excès molaire par rapport au phénol, la mise en contact étant effectuée sous agitation et à une température permettant l'obtention d'un mélange homogène (par exemple, une température de 40°C) ;
- une opération d'ajout au mélange homogène d'un milieu basique, le mélange résultant étant chauffé à une température correspondant à la température de condensation et étant maintenu jusqu'à obtention du taux de conversion du phénol souhaité (ce taux souhaité devant aller de 50 à 80%), lequel peut être mesuré par chromatographie en phase gazeuse couplée à de la spectrométrie de masse ;
- une opération d'arrêt du chauffage une fois le taux de conversion du phénol souhaité atteint.

Avant la mise en oeuvre de l'étape b), le procédé peut comprendre une étape d'ajout à la résine obtenue à l'issue de l'étape a) d'au moins un solvant organique, tel qu'un solvant alcoolique (par exemple, de l'éthanol).

A l'issue de l'étape a), la résine obtenue est une résine comprenant des condensats de phénol et de formaldéhyde et comprenant, en outre, du formaldéhyde libre et du phénol libre.

A partir de la résine obtenue à l'issue de l'étape a), il est déterminé, selon le procédé de l'invention, la teneur en formaldéhyde libre, par exemple, par dosage chimique selon la norme ISO11402 08/2005 (Méthode chlorhydrate d'hydroxylamine), cette étape de détermination étant nécessaire pour déterminer la quantité de composé aminophénolique de l'étape c).

Un protocole précis de détermination de la teneur en formaldéhyde libre est fourni dans la partie relative à l'exposé détaillé de modes de réalisation particuliers.

Le composé aminophénolique de l'étape c) peut être un composé phénolique comprenant au moins un groupe amine primaire $-NH_2$ et, plus spécifiquement, peut être un composé phénolique comportant en position ortho, méta ou para du groupe -OH, un groupe amine primaire $NH_2$ avec de préférence un groupe amine primaire $-NH_2$ en position ortho ou para du groupe -OH, les autres atomes de carbone du cycle phénolique pouvant être liés à un atome d'hydrogène, un groupe alkyle en $C_1$-$C_5$, un groupe méthoxy, un groupe OH ou un groupe $NH_2$.

Plus spécifiquement, le composé aminophénolique peut répondre à la formule suivante :

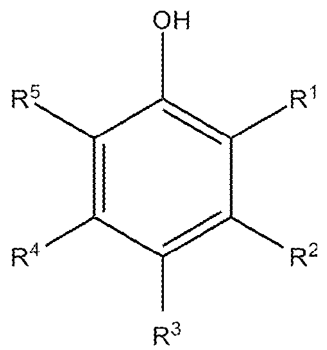

dans laquelle les $R^1$ à $R^5$ représentent, indépendamment l'un de l'autre, un atome d'hydrogène, un groupe alkyle en $C_1$-$C_5$, un groupe méthoxy, un groupe OH ou un groupe $NH_2$ avec pour conditions que l'un au moins des $R^1$ ou $R^3$ représente un groupe $NH_2$ et l'un au moins des $R^1$, $R^3$ ou $R^5$ représente un atome d'hydrogène.

Autrement formulées, les conditions peuvent être formulées comme telles :

- l'un au moins des $R^1$ ou $R^3$ représente un groupe $NH_2$ et
- lorsque $R^1$ est un groupe $NH_2$, l'un au moins des $R^3$ ou $R^5$ représente un atome d'hydrogène ;
- lorsque $R^3$ est un groupe $NH_2$, l'un au moins des $R^1$ ou $R^5$ représente un atome d'hydrogène ;
- lorsque $R^1$ et $R^3$ sont des groupes $NH_2$, $R^5$ représente un atome d'hydrogène.

Plus spécifiquement encore, $R^1$ représente un groupe $NH_2$ et les $R^2$ à $R^5$ représentent un atome d'hydrogène, auquel cas le composé aminophénolique est le 2-aminophénol ou $R^3$ représente un groupe $NH_2$ et les $R^1$, $R^2$, $R^4$ et $R^5$

représentent un atome d'hydrogène, auquel cas le composé aminophénolique est le 4-aminophénol, le composé aminophénolique préféré étant le 2-aminophénol.

Le composé aminophénolique est utilisé en quantité excédentaire par rapport à la quantité de formaldéhyde libre et, plus spécifiquement, en une quantité allant de 1,1 à 1,3 équivalents par rapport au formaldéhyde libre.

Avant l'ajout à la résine issue de l'étape a), le composé aminophénolique peut être préalablement mis en solution dans un solvant organique, et plus spécifiquement, un solvant alcoolique, tel que de l'éthanol ou un mélange d'un solvant organique et d'eau.

L'étape c) est mise en oeuvre à une température inférieure à la température de condensation de l'étape a), par exemple, une température pouvant aller de 30°C à 50°C, ce qui signifie, autrement dit, que la réaction de condensation de l'étape a) ne se poursuit pas, la température de l'étape c) permettant, en revanche, une réaction entre le formaldéhyde libre et le composé aminophénolique et, plus spécifiquement, la réaction produisant un composé imine résultant de la réaction du groupe aldéhyde de la formaldéhyde libre et du groupe amine primaire du composé aminophénolique, le composé aminophénolique remplissant la fonction de piégeage du formaldéhyde libre. L'invention peut être ainsi également définie comme étant l'utilisation d'un composé aminophénolique pour piéger le formaldéhyde libre présent dans une résine phénolique de type résol.

L'étape c) est réalisée, avantageusement, en la seule présence du composé aminophénolique éventuellement mis en solution.

Après l'étape c), le procédé de l'invention peut comprendre, en outre, une étape de concentration sous vide (par exemple, jusqu'à 40 mbar), par exemple, de sorte à éliminer au moins une partie des solvants éventuellement utilisés.

Après l'étape c) ou après l'éventuelle étape de condensation, le procédé de l'invention peut comprendre, en outre, une étape de distillation de la résine à une température de distillation permettant l'élimination d'au moins une partie du formaldéhyde (par exemple, une température de 40°C sous une pression de 40 mbar), en particulier, de sorte à purifier la résine obtenue et de diminuer encore la teneur résiduelle en formaldéhyde libre.

A l'issue du procédé de l'invention, la résine obtenue est une résine phénolique de type résol comprenant des condensats de phénol et de formaldéhyde et des composés imines résultant de la réaction du composé aminophénolique et du formaldéhyde libre.

Ainsi, l'invention a trait également à une résine phénolique de type résol susceptible d'être obtenue par le procédé objet de l'invention et tel que défini ci-dessus, ladite résine comprenant des condensats de phénol et de formaldéhyde (c'est-à-dire, plus spécifiquement, des hydroxyméthylphénols et des condensats comprenant un enchaînement de groupes phényles liés entre eux par des groupes méthylènes) et des composé imines résultant de la réaction du composé aminophénolique et du formaldéhyde libre, ladite résine pouvant également se caractériser par une teneur massique en formaldéhyde très faible, par exemple, inférieure à 0,1 % massique par rapport à la masse totale de la résine.

La présence des composés imines tels que définis ci-dessus dans les résines de l'invention est particulièrement avantageuse, car ils peuvent s'insérer dans le réseau résultant d'un durcissement ultérieur de la résine (correspondant ainsi à un matériau durci ou résite), sans diminuer les propriétés thermomécaniques du matériau durci.

Aussi, les résines conformes à l'invention peuvent être utilisées pour obtenir les matériaux suivants :

- des matériaux durcis (pouvant être qualifiés également de résites) issus du durcissement d'une résine phénolique de type résol conforme à l'invention ;
- des matériaux composites consistant en une matrice en un matériau durci obtenu par durcissement d'une résine phénolique de type résol conforme à l'invention, ladite matrice piégeant une ou plusieurs charges, par exemple, inorganiques, telles que des fibres de verre.

Ainsi, pour finir, l'invention a trait également aux objets suivants :

- un matériau durci (pouvant être qualifié de résite) issu du durcissement d'une résine phénolique du type résol conforme à l'invention et à un procédé d'obtention dudit matériau durci ; et
- un matériau composite consistant en une matrice en un matériau durci obtenu par durcissement d'une résine phénolique de type résol conforme à l'invention, ladite matrice piégeant une ou plusieurs charges et à un procédé d'obtention dudit matériau composite.

Plus spécifiquement, le procédé d'obtention d'un matériau durci (pouvant être qualifié de résite) comprend les étapes successives suivantes :

- une étape de mise en oeuvre du procédé de préparation d'une résine phénolique de type résol tel que défini ci-dessus ;
- une étape de durcissement de la résine ainsi obtenue par chauffage de cette dernière à une température de durcissement, par exemple, une température allant de 120°C à 200°C, par exemple, une température de 175°C.

Le procédé d'obtention d'un matériau composite tel que défini ci-dessus comprend les étapes successives suivantes :

- une étape de mise en oeuvre du procédé de préparation d'une résine phénolique de type résol tel que défini ci-dessus ;
- une étape d'ajout à la résine ainsi obtenue d'une ou plusieurs charges ;
- une étape de durcissement de la résine comprenant une ou plusieurs charges par chauffage de cette dernière à une température de durcissement, par exemple une température allant de 120°C à 200°C, par exemple, une température de 175° C, moyennant quoi il résulte un matériau composite comprenant une matrice résultant du durcissement de la résine et la ou les charges dispersées dans la matrice.

D'autres caractéristiques et avantages de l'invention apparaîtront du complément de description qui suit et qui se rapporte à des modes de réalisation particuliers.

Bien entendu, ce complément de description n'est donné qu'à titre d'illustration de l'invention et n'en constitue en aucun cas une limitation.

## EXPOSÉ DÉTAILLÉ DE MODES DE RÉALISATION PARTICULIERS

Dans les exemples qui suivent, le taux de conversion du phénol et la teneur en formaldéhyde libre sont évalués par les protocoles précis suivants.

<u>*Evaluation du taux de conversion du phénol</u>

Dans un premier temps, une droite d'étalonnage est réalisée par analyse GCMS de 6 échantillons à différentes concentrations de phénol dans de l'acétone. Ces concentrations s'échelonnent de 0,5 % à 12 % (pourcentages massiques de phénol dans la solution) par palier d'environ 2 %. La mesure d'aire du pic du phénol est réalisée et une droite d'étalonnage c = f(A) est obtenue, c correspondant à la concentration du phénol dans l'échantillon et A à l'aire du pic du phénol sur le chromatogramme GCMS (détecteur masse à pompe turbo standard et à ionisation par impact électronique de marque Agilent modèle 5975C TAD inert MSD).

Dans le milieu réactionnel objet de l'étape de condensation, une quantité connue ($m_{prélèvement} \approx 200$ mg) du milieu réactionnel est prélevée et dissoute dans l'acétone ($m_{acétone} \approx 700$ mg). Après analyse par GCMS, l'aire du pic du phénol est mesurée et la concentration dans l'échantillon est calculée à partir de la droite c = f(A).

La quantité de phénol résiduelle dans le milieu réactionnel est alors calculée selon la formule suivante :

$$\boldsymbol{m_p = c \times \frac{(m_{prélèvement} + m_{acétone})}{m_{prélèvement}} \times m_{tot}}$$

dans laquelle :

| | |
|---|---|
| $m_p$ = | masse de phénol résiduelle (en g) dans le milieu réactionnel |
| $c$ = | concentration massique en % calculée par analyse GCMS |
| $m_{prélèvement}$ = | masse du prélèvement (en g) réalisé dans le milieu réactionnel (ou de la résine) |
| $m_{acétone}$ = | masse d'acétone (en g) ajoutée avant analyse GCMS |
| $m_{tot}$ = | masse totale du milieu réactionnel (somme des masses des réactifs) (en g) |

Le taux de conversion est calculé à partir de la formule :

$$\boldsymbol{\tau = 1 - \frac{m_p}{m_p^i}}$$

dans laquelle :

$\tau$ = taux de conversion dans le milieu réactionnel

$m^i_p$ = masse initiale de phénol (en g) dans le milieu réactionnel

Dans le cadre du procédé de préparation de la résine de type résol, la réaction de condensation est stoppée une fois que le taux de conversion du phénol atteint la valeur souhaitée, celui-ci devant s'échelonner de 50 à 80%.

*Evaluation de la teneur massique en formaldéhyde libre selon la norme ISO11402 08/2005

La teneur massique en formaldéhyde libre est déterminée par un titrage en retour par potentiométrie de l'acide chlorhydrique formé pendant la réaction ci-dessous :

$$CH_2OH + NH_2OH{\cdot}HCl \rightarrow CH_2NOH + HCl + H_2O$$

Dans un bécher de 250 mL, une masse m d'environ 5 g de résine est solubilisée dans 50 mL de méthanol sous agitation magnétique et à température ambiante (23 ± 1 °C). Puis les électrodes du pH-mètre sont introduites dans la solution et le pH est ajusté à 3,5 à l'aide d'une solution de HCl 1 M. Ensuite à l'aide d'une pipette environ 25 mL d'une solution de chlorhydrate d'hydroxylamine (10 % en masse dans l'eau et dont le pH a été ajusté à 3,5 à l'aide d'une solution d'hydroxyde de sodium à 0,1 M) sont ajoutés à la solution. Le mélange est agité 10 minutes puis à l'aide d'une burette, une solution d'hydroxyde de sodium 0,1 M (dont la concentration aura été titrée au préalable) est ajoutée jusqu'à ce que le pH revienne à 3,5.

En parallèle, un essai similaire est effectué mais en omettant l'ajout de la résine dans la solution (cet essai pouvant être qualifié d'essai à blanc).

La teneur massique en formaldéhyde libre w(CHzO) est alors obtenue à partir de la formule :

$$w(CH_2O\ libre) = \frac{3c(V1-V0)}{m}$$

dans laquelle :

- ***c*** est la concentration, en moles par litre de la solution d'hydroxyde de sodium utilisée pour le titrage
- ***V0*** est le volume en mL de la solution d'hydroxyde de sodium utilisée pour l'essai à blanc
- ***V1*** est le volume en mL de la solution d'hydroxyde de sodium utilisée pour l'essai avec la résine
- ***m*** est la masse en g de résine utilisée.

EXEMPLE 1

Le présent exemple illustre un procédé de préparation d'une résine phénolique de type résol avec un rapport molaire (formaldéhyde/phénol) de 1,3.

Pour ce faire, du phénol (94,11 g, 1,00 mol) et du formaldéhyde à 37 % massique dans l'eau (105,51 g, 1,30 mol) sont mélangés à 40 °C dans un monocol de 500 mL. Une fois un mélange homogène obtenu, de l'ammoniaque à 28 % massique dans l'eau (3,04 g, 0,05 mol) est ajoutée. Le milieu réactionnel est agité mécaniquement et chauffé à 60 °C durant 48 heures. Le taux de conversion du phénol mesuré selon le protocole mentionné ci-dessus est de 67 %. Le chauffage est arrêté et 25,28 g d'éthanol sont ajoutés pour obtenir un milieu homogène. La teneur massique en formaldéhyde mesurée par dosage chimique selon le protocole mentionné ci-dessus est de 2,2 %.

Ensuite, du 2-aminophénol (15,53 g, 0,14 mol) est mélangé avec 400 mL d'éthanol. Ce mélange est ajouté à 161,78 g de la résine obtenue ci-dessus et dont la teneur en formaldéhyde libre est de 2,2 %. Le milieu est agité à 40 °C durant 15 minutes puis concentrée sous vide jusqu'à 40 mbar. Une résine noire est obtenue avec une masse de 154,34 g. La résine présente une teneur massique en phénol de 9 % et une teneur massique en formaldéhyde de 0,09 %.

Enfin, 16,90 g de la résine sont introduits dans un ballon de 50 ml et distillés sous vide à 40 mbar et 40 °C durant 30 minutes. Une résine noire est obtenue avec une masse de 13,92 g et présente une teneur massique en phénol de 17 % et une teneur massique en formaldéhyde << 0,1 % (non mesurable).

EXEMPLE 2

Le présent exemple illustre un procédé de préparation d'une résine phénolique de type résol avec un rapport molaire (formaldéhyde/phénol) de 2.

Pour ce faire, du phénol (47,06 g, 0,50 mol) et du formaldéhyde à 37 % massique dans l'eau (81,16 g, 1,00 mol) sont mélangés à 40 °C dans un monocol de 250 mL. Une fois un mélange homogène obtenu, de l'ammoniaque à 28 % massique dans l'eau (1,52 g, 0,025 mol) est ajoutée. Le milieu réactionnel est agité mécaniquement et chauffé à 60 °C durant 48 heures. Le taux de conversion du phénol mesuré selon le protocole défini ci-dessus est de 69 %. Le

chauffage est arrêté et 14,17 g d'éthanol sont ajoutés pour obtenir un milieu homogène. La teneur massique en formaldéhyde mesurée par dosage chimique selon le protocole défini ci-dessus est de 8,3 %.

Ensuite, du 2-aminophénol (8,22 g, 0,075 mol) est mélangé avec 200 mL d'éthanol. Ce mélange est ajouté à 22,70 g d'une résine obtenue ci-dessus et dont la teneur massique en formaldéhyde libre est de 8,3 %. Le milieu est agité à 40 °C durant 15 minutes puis concentrée sous vide jusqu'à 40 mbar. Une résine noire est obtenue avec une masse de 23,04 g. La résine présente une teneur massique en phénol de 9 % et une teneur massique en formaldéhyde < 0,1 %.

EXEMPLE 3

Le présent exemple illustre un procédé de préparation d'une résine phénolique de type résol avec un rapport molaire (formaldéhyde/phénol) de 1,3.

Pour ce faire, du phénol (94,11 g, 1,00 mol) et du formaldéhyde à 37 % massique dans l'eau (105,51 g, 1,30 mol) sont mélangés à 40 °C dans un monocol de 500 mL. Une fois un mélange homogène obtenu, de l'ammoniaque à 28 % massique dans l'eau (3,04 g, 0,05 mol) est ajoutée. Le milieu réactionnel est agité mécaniquement et chauffé à 60 °C durant 48 heures. Le taux de conversion du phénol mesuré selon le protocole ci-dessus est de 67 %. Le chauffage est arrêté et 25,28 g d'éthanol sont ajoutés pour obtenir un milieu homogène. La teneur massique en formaldéhyde mesurée par dosage chimique selon le protocole mentionné ci-dessus est de 2,2 %.

Ensuite, du 4-aminophénol (1,65 g, 0,015 mol) est mélangé avec 160 g d'un mélange isomassique éthanol/eau. Ce mélange est ajouté à 19,70 g de la résine obtenue ci-dessus et dont la teneur en formaldéhyde libre est de 2,2 %. Le milieu est agité à 40 °C durant 15 minutes puis concentrée sous vide jusqu'à 40 mbar. Une résine noire est obtenue avec une masse de 15,77 g. La résine présente une teneur massique en phénol de 8 % et une teneur massique en formaldéhyde < 0,1 %.

EXEMPLE 4

Le présent exemple illustre un procédé de préparation d'une résine phénolique de type résol avec un rapport molaire (formaldéhyde/phénol) de 2.

Pour ce faire, du phénol (47,06 g, 0,50 mol) et du formaldéhyde à 37 % massique dans l'eau (81,16 g, 1,00 mol) sont mélangés à 40 °C dans un monocol de 250 mL. Une fois un mélange homogène obtenu, de l'ammoniaque à 28 % massique dans l'eau (1,52 g, 0,025 mol) est ajoutée. Le milieu réactionnel est agité mécaniquement et chauffé à 60 °C durant 48 heures. Le taux de conversion du phénol mesuré selon le protocole mentionné ci-dessus est de 69 %. Le chauffage est arrêté et 14,17 g d'éthanol sont ajoutés pour obtenir un milieu homogène. La teneur massique en formaldéhyde mesurée par dosage chimique selon le protocole mentionné ci-dessus est de 8,3 %.

Ensuite, du 4-aminophénol (8,19 g, 0,075 mol) est mélangé avec 200 mL d'éthanol. Ce mélange est ajouté à 22,61 g d'une résine obtenue ci-dessus et dont la teneur en formaldéhyde libre est de 8,3 %. Le milieu est agité à 40 °C durant 15 minutes puis concentrée sous vide jusqu'à 40 mbar. Une résine noire est obtenue avec une masse de 24,04 g. La résine présente une teneur massique en phénol de 7 % et une teneur massique en formaldéhyde en 1,8 %.

EXEMPLE COMPARATIF 1

Le présent exemple illustre un procédé de préparation d'une résine phénolique de type résol avec un rapport molaire (formaldéhyde/phénol) de 1,3, le procédé étant non conforme à l'invention puisqu'il ne comporte pas l'ajout de composé aminophénolique.

Pour ce faire, du phénol (94,11 g, 1,00 mol) et du formaldéhyde à 37 % massique dans l'eau (105,51 g, 1,30 mol) sont mélangés à 40 °C dans un monocol de 500 mL. Une fois un mélange homogène obtenu, de l'ammoniaque à 28 % massique dans l'eau (3,04 g, 0,05 mol) est ajoutée. Le milieu réactionnel est agité mécaniquement et chauffé à 60 °C durant 48 heures. Le taux de conversion du phénol mesuré selon le protocole mentionné ci-dessus est de 67 %. Le chauffage est arrêté et 25,28 g d'éthanol sont ajoutés pour obtenir un milieu homogène.

Ensuite, 54,40 g de la résine obtenue est introduite dans le ballon de 50 mL et distillée sous vide à 40 mbar et 40°C pendant 30 minutes. Il est obtenu une résine orange de masse 42,55 g présentant une teneur massique en phénol de 17% et une teneur massique en formaldéhyde de 2,2%.

Il ressort clairement des résultats biens moins efficaces que dans l'exemple 1, dans lequel un composé aminophénolique a été ajouté.

EXEMPLE COMPARATIF 2

Le présent exemple illustre un procédé de préparation d'une résine phénolique de type résol avec un rapport

molaire (formaldéhyde/phénol) de 2, le procédé étant non conforme à l'invention puisqu'il ne comporte pas l'ajout de composé aminophénolique.

Pour ce faire, du phénol (47,06 g, 0,50 mol) et du formaldéhyde à 37 % massique dans l'eau (81,16 g, 1,00 mol) sont mélangés à 40 °C dans un monocol de 250 mL. Une fois un mélange homogène obtenu, de l'ammoniaque à 28 % massique dans l'eau (1,52 g, 0,025 mol) est ajoutée. Le milieu réactionnel est agité mécaniquement et chauffé à 60 °C durant 48 heures. Le taux de conversion du phénol mesuré selon le protocole défini ci-dessus est de 69 %. Le chauffage est arrêté et 14,17 g d'éthanol sont ajoutés pour obtenir un milieu homogène.

Ensuite, 27,44 g de la résine obtenue est introduite dans le ballon de 50 mL et distillée sous vide à 40 mbar et 40°C pendant 30 minutes. Il est obtenu une résine orange de masse 16,03 g présentant une teneur massique en phénol de 16% et une teneur massique en formaldéhyde de 11,6%.

Il ressort clairement des résultats biens moins efficaces que dans l'exemple 2, dans lequel un composé aminophénolique a été ajouté.

EXEMPLE COMPARATIF 3

Le présent exemple illustre un procédé de préparation d'une résine phénolique de type résol avec un rapport molaire (formaldéhyde/phénol) de 1,3, le procédé étant non conforme à l'invention, puisqu'il comporte l'ajout d'un composé qui n'est pas un composé aminophénolique.

Pour ce faire, du phénol (94,11 g, 1,00 mol) et du formaldéhyde à 37 % massique dans l'eau (105,51 g, 1,30 mol) sont mélangés à 40 °C dans un monocol de 500 mL. Une fois un mélange homogène obtenu, de l'ammoniaque à 28 % massique dans l'eau (3,04 g, 0,05 mol) est ajoutée. Le milieu réactionnel est agité mécaniquement et chauffé à 60 °C durant 48 heures. Le taux de conversion du phénol mesuré selon le protocole défini ci-dessus est de 67 %. Le chauffage est arrêté et 25,28 g d'éthanol sont ajoutés pour obtenir un milieu homogène. La teneur massique en formaldéhyde mesurée par dosage chimique selon le protocole défini ci-dessus est de 1,9 %.

Ensuite, dans un monocol de 100 mL, il est introduit 15,13 g de la résine ainsi préparée et de l'éthanolamine (1,08 g). Le mélange est agité 15 minutes à 40 °C puis distillé sous vide à 40 mbar, 40 °C durant 20 minutes. Il est obtenu une résine brune avec une masse de 12,78 g. La résine présente une teneur massique en phénol de 20 % et une teneur massique en formaldéhyde de 0,7 %.

Il ressort clairement des résultats moins efficaces que dans l'exemple 1, dans lequel un composé aminophénolique a été ajouté.

EXEMPLE COMPARATIF 4

Le présent exemple illustre un procédé de préparation d'une résine phénolique de type résol avec un rapport molaire (formaldéhyde/phénol) de 1,3, le procédé étant non conforme à l'invention, puisqu'il comporte l'ajout d'un composé qui n'est pas un composé aminophénolique.

Pour ce faire, du phénol (94,11 g, 1,00 mol) et du formaldéhyde à 37 % massique dans l'eau (105,51 g, 1,30 mol) sont mélangés à 40 °C dans un monocol de 500 mL. Une fois un mélange homogène obtenu, de l'ammoniaque à 28 % massique dans l'eau (3,04 g, 0,05 mol) est ajoutée. Le milieu réactionnel est agité mécaniquement et chauffé à 60 °C durant 48 heures. Le taux de conversion du phénol mesuré selon le protocole défini ci-dessus est de 67 %. Le chauffage est arrêté et 25,28 g d'éthanol sont ajoutés pour obtenir un milieu homogène. La teneur massique en formaldéhyde mesurée par dosage chimique selon le protocole défini ci-dessus est de 1,9 %.

Ensuite, dans un monocol de 100 mL, il est introduit 15,01 g de la résine ainsi préparée et de l'urée (1,03 g). Le mélange est chauffé pendant 2 heures à 60°C puis distillé sous vide à 40 mbar, 40 °C durant 20 minutes. Il est obtenu une résine brune avec une masse de 14,55 g. La résine présente une teneur massique en phénol de 23 % et une teneur massique en formaldéhyde de 0,3 %.

Il ressort clairement des résultats moins efficaces que dans l'exemple 1, dans lequel un composé aminophénolique a été ajouté.

EXEMPLE 5

Dans cet exemple, des résines des exemples précédents ont été soumises à une étape de durcissement par chauffage pour former un matériau durci (ou résite).

Plus spécifiquement, les résines ont été dégazées au préalable à une température allant de 40 à 60°C et une pression réduite puis ont été chauffées sous diazote selon un cycle adapté jusqu'à une température de 175°C (le cycle consistant, plus spécifiquement, à chauffer pendant 2 heures à 60°C sous 20 mbar d'air puis 3 heures à 100°C puis enfin 12 heures à 175°C sous pression atmosphérique de diazote).

A partir des matériaux durcis ont été effectués, dans un premier temps, une analyse thermogravimétrique et,

dans un deuxième temps, une extraction Soxhlet.

Les analyses thermogravimétriques sont réalisées avec un appareil TGA-Q500 de TA Instruments. Pour ce faire, il est pratiqué une rampe sous argon à 20 °C/min jusqu'à 1000 °C. Le résidu à 1000 °C est appelé rendement carbone et est qualifié par un pourcentage en carbone (% C) et la température à 5 % massique de dégradation est appelée $Td_{5\%}$.. Dans le tableau ci-dessous il est décrit les propriétés thermiques des résites obtenues à partir des résines des exemples 1, 2, 3 et 4 et des exemples comparatifs 1, 2, 3 et 4.

| Exemple | Composé ajouté | % C | $Td_{5\%}$ | Teneur en formaldéhyde |
|---|---|---|---|---|
| Comparatif 1 | / | 65 | 410 | 2,2 % |
| 1 | 2-aminophénol | 63 | 391 | << 0,1 % |
| 3 | 4-aminophénol | 61 | 361 | < 0,1 % |
| Comparatif 3 | Ethanolamine | 52 | 341 | 0,7 % |
| Comparatif 4 | Urée | 63 | 355 | 0,3 % |
| Comparatif 2 | / | 58 | 340 | 11,6 % |
| 2 | 2-aminophénol | 56 | 295 | < 0,1 % |
| 4 | 4-aminophénol | 55 | 315 | 1,8 % |

Les résines obtenues par le procédé de l'invention, tout en présentant des teneurs en formaldéhyde réduites, présentent des propriétés thermogravimétriques tout à fait comparables aux exemples comparatifs.

L'extraction Soxhlet est mise en oeuvre de la manière suivante :

- Introduction d'un masse $m_i$ de 1-2 g de résite broyée finement dans une cartouche en cellulose ;
- Extraction Soxhlet durant 24 heures à 120-130 °C avec l'éthanol comme solvant d'extraction ;
- Séchage de la cartouche pendant 5 heures à l'étuve à 80°C sous air ;
- Pesée de la cartouche pour obtenir une masse $m_F$, cette masse $m_F$ étant déterminée par la relation suivante :

$$m_F = m_{\text{cartouche après séchage}} - m_{\text{cartouche vide}}$$

dans laquelle $m_{\text{cartouche après séchage}}$ représente la masse de la cartouche après séchage à l'étuve en g et $m_{\text{cartouche vide}}$ représente la masse de la cartouche en cellulose vide.

La perte de masse est alors exprimée en % et définie comme $P_m= m_i/m_F$.

| Exemple | Composé ajouté | $P_m$ (%) | Teneur en formaldéhyde |
|---|---|---|---|
| Comparatif 1 | / | 0,9 | 2,2 % |
| 1 | 2-aminophénol | 1,0 | << 0,1% |
| Comparatif 3 | Ethanolamine | 22,6 | 0,7 % |
| Comparatif 4 | Urée | 2,9 | 0,3 % |
| Comparatif 2 | / | 2,4 | 11,6 % |
| 2 | 2-aminophénol | 1,8 | < 0,1 % |

Les pertes de masse très faibles pour les résines obtenues conformément au procédé de l'invention et, notamment avec le 2-aminophénol, attestent de la bonne intégration des composés ajoutés dans le réseau de la résine.

## Revendications

1. Procédé de préparation d'une résine phénolique de type résol comprenant les étapes suivantes :

   a) une étape de condensation du phénol et du formaldéhyde, en milieu basique, le formaldéhyde étant en excès

molaire par rapport au phénol, à une température de condensation d'au moins 50°C jusqu'à ce que le taux de conversion du phénol soit de 50 à 80%, moyennant quoi il résulte une résine phénolique de type résol comprenant du formaldéhyde libre ;
b) une étape de mesure de la teneur massique en formaldéhyde libre de la résine phénolique obtenue en a) ;
c) une étape de diminution de la teneur massique en formaldéhyde libre de la résine phénolique obtenue en a) par mise en contact de celle-ci avec un composé aminophénolique en quantité excédentaire par rapport au formaldéhyde libre et à une température inférieure à la température de condensation de l'étape a).

**2.** Procédé selon la revendication 1, dans lequel le milieu basique est une solution aqueuse comprenant une ou plusieurs bases choisie(s) parmi NaOH, $Na_2CO_3$, KOH, $K_2CO_3$, $Ba(OH)_2$, $NH_3$, une amine primaire, une amine secondaire et des mélanges de celles-ci.

**3.** Procédé selon la revendication 1 ou 2, dans lequel la ou les bases du milieu basique est (sont) présente(s) en une teneur allant de 1 à 20% molaire par rapport au nombre de moles de phénol présent initialement dans l'étape de condensation.

**4.** Procédé selon l'une quelconque des revendications précédentes, dans lequel le rapport molaire (formaldéhyde/phénol) est supérieur à 1 et inférieur ou égal à 3.

**5.** Procédé selon l'une quelconque des revendications précédentes, dans lequel l'étape de condensation a) est mise en oeuvre par la séquence d'opérations suivantes :

- une opération de mise en contact du phénol et du formaldéhyde, le formaldéhyde étant en excès molaire par rapport au phénol, la mise en contact étant effectuée sous agitation et à une température permettant l'obtention d'un mélange homogène ;
- une opération d'ajout au mélange homogène d'un milieu basique, le mélange résultant étant chauffé à une température correspondant à la température de condensation et étant maintenu jusqu'à obtention du taux de conversion du phénol souhaité ;
- une opération d'arrêt du chauffage une fois le taux de conversion du phénol souhaité atteint.

**6.** Procédé selon l'une quelconque des revendications précédentes, dans lequel le composé aminophénolique est un composé phénolique comprenant au moins un groupe amine primaire $-NH_2$.

**7.** Procédé selon l'une quelconque des revendications précédentes, dans lequel le composé aminophénolique est un composé phénol comportant en position ortho, méta ou para du groupe -OH, un groupe amine primaire $NH_2$.

**8.** Procédé selon l'une quelconque des revendications précédentes, dans lequel le composé aminophénolique répond à la formule suivante :

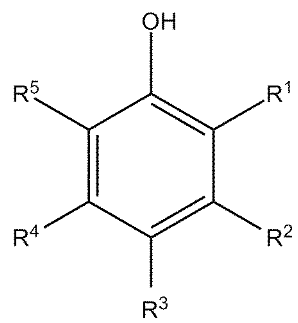

dans laquelle les $R^1$ à $R^5$ représentent, indépendamment l'un de l'autre, un atome d'hydrogène, un groupe alkyle en $C_1$-$C_5$, un groupe méthoxy, un groupe OH ou un groupe $NH_2$ avec pour conditions que l'un au moins des $R^1$ ou $R^3$ représente un groupe $NH_2$ et l'un au moins des $R^1$, $R^3$ ou $R^5$ représente un atome d'hydrogène.

**9.** Procédé selon l'une quelconque des revendications précédentes, dans lequel le composé aminophénolique est le 2-aminophénol ou le 4-aminophénol.

**10.** Procédé selon l'une quelconque des revendications précédentes, comprenant, en outre, après l'étape c), une étape de concentration sous vide.

**11.** Résine phénolique de type résol susceptible d'être obtenue par le procédé tel que défini selon l'une quelconque des revendications 1 à 10, ladite résine comprenant des condensats de phénol et de formaldéhyde et des composés imines résultant de la réaction du composé aminophénolique et du formaldéhyde libre.

**12.** Matériau durci issu du durcissement d'une résine phénolique telle que définie à la revendication 11.

**13.** Matériau composite consistant en une matrice en un matériau durci obtenu par durcissement d'une résine phénolique de type résol telle que définie à la revendication 11, ladite matrice piégeant une ou plusieurs charges.

**14.** Procédé d'obtention d'un matériau durci tel que défini à la revendication 12 comprenant les étapes suivantes :

- une étape de mise en oeuvre du procédé de préparation d'une résine phénolique de type résol tel que défini selon l'une quelconque des revendications 1 à 10 ;
- une étape de durcissement de la résine ainsi obtenue par chauffage de cette dernière à une température de durcissement.

**15.** Procédé d'obtention d'un matériau composite tel que défini à la revendication 13, comprenant les étapes suivantes :

- une étape de mise en oeuvre du procédé de préparation d'une résine phénolique de type résol tel que défini selon l'une quelconque des revendications 1 à 10;
- une étape d'ajout à la résine ainsi obtenue d'une ou plusieurs charges ;
- une étape de durcissement de la résine comprenant une ou plusieurs charges par chauffage de cette dernière à une température de durcissement, moyennant quoi il résulte un matériau composite comprenant une matrice résultant du durcissement de la résine et la ou les charges dispersées dans la matrice.

## Patentansprüche

**1.** Verfahren zur Herstellung eines Phenolharzes vom Resoltyp, umfassend die folgenden Schritte:

a) einen Schritt der Kondensation von Phenol und Formaldehyd in einem basischen Medium, wobei das Formaldehyd in einem molaren Überschuss gegenüber dem Phenol vorliegt, bei einer Kondensationstemperatur von mindestens 50 °C, bis die Umwandlungsrate des Phenols 50 bis 80 % beträgt, wodurch man ein Phenolharz vom Resoltyp erhält, das freies Formaldehyd enthält;
b) einen Schritt des Messens des Massengehalts an freiem Formaldehyd des in a) erhaltenen Phenolharzes;
c) einen Schritt zur Verringerung des Massengehalts an freiem Formaldehyd des in a) erhaltenen Phenolharzes durch Inkontaktbringen desselben mit einer Aminophenolverbindung in einer Menge, die im Verhältnis zum freien Formaldehyd überschüssig ist, und bei einer Temperatur unterhalb der Kondensationstemperatur von Schritt a).

**2.** Verfahren nach Anspruch 1, wobei das basische Medium eine wässrige Lösung ist, die eine oder mehrere Basen umfasst, ausgewählt aus NaOH, $Na_2CO_3$, KOH, $K_2CO_3$, $Ba(OH)_2$, $NH_3$, einem primären Amin, einem sekundären Amin und Mischungen davon.

**3.** Verfahren nach Anspruch 1 oder 2, wobei die Base(n) des basischen Mediums in einem Gehalt von 1 bis 20 Mol-%, bezogen auf die Molzahl des ursprünglich in der Kondensationsstufe vorhandenen Phenols, vorliegt (vorliegen).

**4.** Verfahren nach einem der vorhergehenden Ansprüche, wobei das Molverhältnis (Formaldehyd/Phenol) größer als 1 und kleiner als oder gleich 3 ist.

**5.** Verfahren nach einem der vorhergehenden Ansprüche, wobei der Kondensationsschritt a) durch die folgende Abfolge von Operationen durchgeführt wird:

- einen Vorgang des Inkontaktbringens des Phenols und des Formaldehyds, wobei das Formaldehyd in einem molaren Überschuss gegenüber dem Phenol vorliegt, wobei das Inkontaktbringen unter Rühren und bei einer

Temperatur erfolgt, die es ermöglicht, eine homogene Mischung zu erhalten;
- einen Vorgang der Zugabe eines basischen Mediums zu der homogenen Mischung, wobei die resultierende Mischung auf eine Temperatur erhitzt wird, die der Kondensationstemperatur entspricht, und so lange gehalten wird, bis die gewünschte Phenolumwandlungsrate erreicht ist;
- einen Vorgang des Anhaltens der Erhitzung, sobald die gewünschte Phenolumwandlungsrate erreicht ist.

**6.** Verfahren nach einem der vorhergehenden Ansprüche, wobei die Aminophenolverbindung eine Phenolverbindung ist, die mindestens eine primäre Aminogruppe $-NH_2$ umfasst.

**7.** Verfahren nach einem der vorhergehenden Ansprüche, wobei die Aminophenolverbindung eine Phenolverbindung ist, die in ortho-, meta- oder para-Position der -OH-Gruppe eine primäre Aminogruppe $-NH_2$ aufweist.

**8.** Verfahren nach einem der vorhergehenden Ansprüche, wobei die Aminophenolverbindung die folgende Formel aufweist:

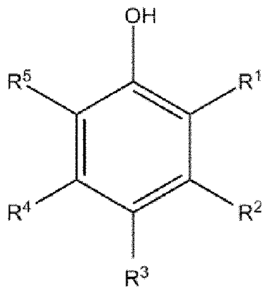

worin $R^1$ bis $R^5$ unabhängig voneinander für ein Wasserstoffatom, eine $C_1$-Cs-Alkylgruppe, eine Methoxygruppe, eine OH-Gruppe oder eine $NH_2$-Gruppe stehen, mit den Maßgaben, dass mindestens eines von $R^1$ oder $R^3$ für eine $NH_2$-Gruppe stehen und mindestens eines von $R^1$, $R^3$ oder $R^5$ für ein Wasserstoffatom steht.

**9.** Verfahren nach einem der vorhergehenden Ansprüche, wobei die Aminophenolverbindung 2-Aminophenol oder 4-Aminophenol ist.

**10.** Verfahren nach einem der vorhergehenden Ansprüche, das nach Schritt c) außerdem einen Konzentrationsschritt unter Vakuum umfasst.

**11.** Phenolharz vom Resoltyp, erhältlich durch das Verfahren, wie es nach einem der Ansprüche 1 bis 10 definiert ist, wobei das Harz Phenol- und Formaldehydkondensate und Iminverbindungen umfasst, die aus der Reaktion der Aminophenolverbindung und des freien Formaldehyds resultieren.

**12.** Gehärtetes Material aus der Härtung eines Phenolharzes, wie in Anspruch 11 definiert.

**13.** Verbundmaterial, bestehend aus einer Matrix aus einem gehärteten Material, das durch Härten eines Phenolharzes vom Resoltyp, wie in Anspruch 11 definiert, erhalten wird, wobei die Matrix einen oder mehrere Füllstoffe einschließt.

**14.** Verfahren zum Erhalten eines gehärteten Materials wie in Anspruch 12 definiert, umfassend die folgenden Schritte:

- einen Schritt der Durchführung des Verfahrens zur Herstellung eines Phenolharzes vom Resoltyp, wie es nach einem der Ansprüche 1 bis 10 definiert ist;
- einen Schritt des Härtens des so erhaltenen Harzes durch Erhitzen des Harzes auf eine Härtungstemperatur.

**15.** Verfahren zum Erhalten eines Verbundmaterials, wie es in Anspruch 13 definiert ist, umfassend die folgenden Schritte:

- einen Schritt der Durchführung des Verfahrens zur Herstellung eines Phenolharzes vom Resoltyp, wie es nach einem der Ansprüche 1 bis 10 definiert ist;
- einen Schritt des Hinzufügens eines oder mehrerer Füllstoffe zu dem so erhaltenen Harz;
- einen Schritt des Härtens des Harzes, das einen oder mehrere Füllstoffe umfasst, durch Erhitzen des Harzes

auf eine Härtungstemperatur, wodurch ein Verbundmaterial entsteht, das eine Matrix umfasst, die aus der Härtung des Harzes resultiert, und den oder die Füllstoffe, die in der Matrix dispergiert sind.

## Claims

**1.** Method for preparing a resol-type phenolic resin comprising the following steps:

a) a step of condensing phenol and formaldehyde, in a basic medium, the formaldehyde being in molar excess with respect to the phenol, at a condensation temperature of at least 50°C until the phenol conversion rate is 50 to 80%, whereby a resol-type phenolic resin results comprising free formaldehyde;
b) a step of measuring the free formaldehyde mass content of the phenolic resin obtained in a);
c) a step of reducing the free formaldehyde mass content of the phenolic resin obtained in a) by placing it in contact with an aminophenolic compound in an excess amount with respect to the free formaldehyde and at a temperature lower than the condensation temperature of step a).

**2.** Method according to claim 1, wherein the basic medium is an aqueous solution comprising one or more bases selected from NaOH, $Na_2CO_3$, KOH, $K_2CO_3$, $Ba(OH)_2$, $NH_3$, a primary amine, a secondary amine and mixtures thereof.

**3.** Method according to claim 1 or 2, wherein the base(s) of the basic medium is (are) present in a content ranging from 1 to 20% molar with respect to the number of moles of phenol initially present in the condensation step.

**4.** Method according to any one of the preceding claims, wherein the mole ratio (formaldehyde/phenol) is greater than 1 and less than or equal to 3.

**5.** Method according to any one of the preceding claims, wherein the condensation step a) is implemented by the sequence of following operations:

- an operation of placing in contact phenol and formaldehyde, the formaldehyde being in molar excess with respect to the phenol, the placing in contact being performed under stirring and at a temperature for obtaining a homogeneous mixture;
- an operation of adding a basic medium to the homogeneous mixture, the resulting mixture being heated to a temperature corresponding to the condensation temperature and being maintained until the desired phenol conversion rate is obtained;
- an operation of stopping the heating once the desired phenol conversion rate has been reached.

**6.** Method according to any one of the preceding claims, wherein the aminophenolic compound is a phenolic compound comprising at least one $-NH_2$ primary amine group.

**7.** Method according to any one of the preceding claims, wherein the aminophenolic compound is a phenol compound including in ortho, meta or para position of the -OH group, an $NH_2$ primary amine group.

**8.** Method according to any one of the preceding claims, wherein the aminophenolic compound meets the following formula:

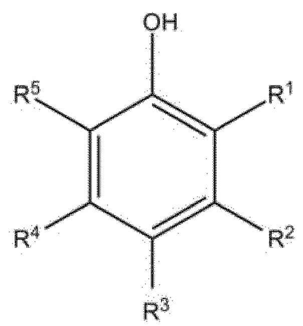

wherein $R^1$ to $R^5$ represent, independently of one another, a hydrogen atom, a $C_1$-$C_5$ alkyl group, a methoxy group, an OH group or an $NH_2$ group with for conditions that one at least of $R^1$ or $R^3$ represents an $NH_2$ group and one at least of $R^1$, $R^3$ or $R^5$ represents a hydrogen atom.

**9.** Method according to any one of the preceding claims, wherein the aminophenolic compound is 2-aminophenol or 4-aminophenol.

**10.** Method according to any one of the preceding claims, further comprising, after step c), a vacuum concentration step.

**11.** Resol-type phenolic resin likely to be obtained by the method such as defined according to any one of claims 1 to 10, said resin comprising phenol and formaldehyde condensates and imine compounds resulting from the reaction of the aminophenolic compound and of the free formaldehyde.

**12.** Hardened material from the hardening of a phenolic resin such as defined in claim 11.

**13.** Composite material consisting of a matrix made of a hardened material obtained by hardening a resol-type phenolic resin such as defined in claim 11, said matrix trapping one or more fillers.

**14.** Method for obtaining a hardened material such as defined in claim 12 comprising the following steps:

- a step of implementing the method for preparing a resol-type phenolic resin such as defined according to any one of claims 1 to 10;
- a step of hardening the resin thus obtained by heating the latter to a hardening temperature.

**15.** Method for obtaining a composite material such as defined in claim 13, comprising the following steps:

- a step of implementing the method for preparing a resol-type phenolic resin such as defined according to any one of claims 1 to 10;
- a step of adding to the resin thus obtained one or more fillers;
- a step of hardening the resin comprising one or more fillers by heating the latter to a hardening temperature, whereby a composite material results comprising a matrix resulting from the hardening of the resin and the filler(s) dispersed in the matrix.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 0148050 A
- EP 0480778 A
- US 2013183524 A